# EUROPÄISCHE PATENTANMELDUNG

(11) **EP 2 677 648 A2**
(43) Veröffentlichungstag der Anmeldung: **25.12.2013**
(21) Anmeldenummer: 13468001.6
(22) Anmeldetag: 15.01.2013
(51) Int. Cl.: H02M 3/158

(54) **Schaltwandler mit einer Spule und mehreren Ausgangsspannungen**

(30) Priorität: 18.05.2012 SI 201200151
(71) Anmelder: IMP Pumps d.d.o., 1292 Ig (SI)
(72) Erfinder: Svetlin, Janez, 1233 Dob (SI)

(57) **Zusammenfassung**

Für den Betrieb des Schaltwandlers mit einer Ausgangsspannung gebraucht man den PWM Generator, der den einstufigen Leistungsschalter S steuert, über den der Strom aus der Spüle L und den geladenen Kondensator C fliest. Für den ordnungsgemäßen Betrieb der Diode D und das Entladen des Kondensators C wird der Wiederstand R verwendet. Der Schaltwandler ist ein Spannungswandler, der eine oder mehrere Ausgangsspannungen hat. Für den Betrieb mehrerer unterschiedlicher Ausgangsspannungen braucht man mehrere solche Blöcke, die die Funktion eines einpoligen Schaltwandlers haben oder es werden anstatt der Schalter S halbleitende Elemente - Transistoren als Schalter T1, T2 usw. gebraucht.

## Beschreibung

Für das Schaffen von elektronischen Schaltungen, die Grundlage des elektrotechnischen Projektierens eines Products als Ganzes, oder als Teil einer größeren Komponente sind, ist es wesentlich zwei grundlegende Fragen zu beantworten; Was für einen Strom und Spannungs Eingang wir haben und was für Strom und Spannungen wir am Ausgang erhalten wollen. Dabei müssen wir uns an die bestimmten Frequenzen halten, die als Eingangsnetzfrequenz oder aber auch mit bestimmten Frequenzwandlern geändert werden können.

In unserem vorliegenden Vorschlag der Patentanmeldung der elektronischen Schaltung, die Gegenstand unserer Erfindung ist, ist eine Schaltung definiert, die die Erzeugung mehrerer regulierter Spannungen mit Hilfe einer einzigen Spule ermöglicht. Schaltwandler werden oftmals verwendet, wenn der Bedarf nach effizienter Spannungswandlung besteht. Die Schaltung kann durch zwei oder mehr Schaltnetzteile ersetzt werden, wobei sie weniger Komponenten braucht, als ein einzelner Wandler gebrauchen wurde.

Das technische Problem das unsere Erfindung löst, ist die Mitbenutzung der Haupt-Leistungselemente (Schalter, Spule, Diode, PWM) und der gleichen Funktionselemente, für welche wir keinen größeren Strome und Spannungen gebrauchen und sie in Zusammenarbeit ein Schaltnetzteil mit mehreren Ausgangsspannungen bilden. Besonders in Wandlern mit hoher Eingangsgleichspannung, weil diese Komponenten einen großen Teil der Gesamtgröße im Bezug auf die Dimensionen, als auch des Preises eines einzelnen Einbauelements darstellen. Im Wesentlichen senkt die unten beschriebene Erfindung, erbaut nach unserer Idee, die Gesamtkosten des Umwandlers und damit auch des Endprodukts in das es eingebaut ist. Daher kann die unten beschriebene Erfindung zu Einsparrungen bei dem Preis und der Größe des finalen Umwandlers beitragen. In der Elektronik-Industrie ist der Trend in Richtung der Preis-Rentabilität des Produkts und der Reduzierung der Dimensionen des Produkts gerichtet. Unsere Erfindung ist in diesem Sinne konzipiert, dass sie beide sowohl die preisliche als auch die räumliche Bedingungen erfüllt und als solche am Endprodukt installiert wird, das einen guten Design und praktische Funktionalität hat.

Beim recherchieren unserer Idee auf globaler Ebene fanden wir eine Menge von patentierten und allgemein bekannten technischen Lösungen, die die Umwandlung der elektrischen Spannung und des Stroms in kleineren und größeren Werten behandeln. Deswegen werden wir im Nutze der Verteidigung unserer technischen Lösung bestimmte Patentlösungen vorstellen, wie Patente: US 2010/0097045 A1 ist eine ähnliche Sache und wird noch genereller beschrieben, wobei man für das Aufladen einzelner Schalter einen gemeinsamen Knotenpunkt gebraucht, wo sie sich nach bestimmter Sequenz ladet. Auch US 2004/0135562 A ist ähnlich, wobei mehrere Arten von regulierter Spannung abgegeben werden. Die Lösung nach Patent US 2010/0231186 A1 ist, dass ebenso nur eine Spule gebraucht wird und ein Kontrollsystem für den Übergang der Spannung auf die Spule, so dass sich die Spannung am ersten Terminal stabilisieren muss, wenn wir eine höhere Spannung am nächsten Terminal oder Ausgang erreichen wollen. Interessant bei allen Lösungen ist, dass sie alle als Support für bestimmte technische Geräte bestimmt sind, die sehr niedrige Spannungen gebrauchen und vor allen in der Computertechnik gebraucht werden.

Unsere technische Lösung, als ein Leistungsgerät, verwendet sich bei den Laden der Elektronik der Umlaufpumpen, wo sich zuerst 230 V Wechselnetzspannung umleitet und danach in Spannungen von 24, 15 und 3.3 V oder ähnliche Ausgangsspannungen umwandelt, nach dem Prinzip, der im nachkommenden Text beschriebenen wird. Bei der praktischen Ausführung verwendet man dabei nur eine Spule, die Anzahl der aktiven Schalter wird reduziert indem ein Schalter durch einer Diode ersetzt wird.

Die Lösung wurde bei zwei unterschiedlichen Schaltungen verwendet und zwar für zwei unterschiedliche Ausgangsspannungen. In beiden Fällen war die Eingangsspannung ∼100-500 V DC, die Ausgangsspannung im ersten Beispiel war 15V und 3.7V, im zweiten 24V und 5V. Mit diesen Ausführungsbeispielen bestätigten wir die technische Nützlichkeit unserer Innovation, und konzentrieren uns gleichzeitig auf die wirklich benötigten Spannungen und die damit gewünschten Ströme, die einen optimalen Betrieb unseres Endprodukts ermöglichen - die Umlaufpumpe, die im hohen Maße Zuverlässig sein muss und eine lange Wirkungsdauer unter maximalen Strom- und mechanischen Belastungen vorweisen muss . Auf der anderen Seite muss eine solche Schaltung auch eine bestimmte Grenze im Bezug auf die wirtschaftliche Einträglichkeit für das Endprodukt und die installierten Komponenten haben, was wir mit unserer technischen Lösung und den Vorschlag der vorliegenden Patentanmeldung für unsere innovative Lösung erreicht haben.

In der fortgesetzten Darstellung des Betriebsprinzips der innovativen Lösung nach vorgelegter Patentdokumentation werden wir uns auf die unten gezeigten Skizzen konzentrieren, die unterschiedliche Umsetzungsversionen unserer Schaltung darstellen:
- Abbildung 1: Schema des Schaltnetzteils mit einem Ausgang
- Abbildung 2: Grundschema der Erfindung mit vier Ausgängen
- Abbildung 3: Vereinfachtes Schema der realen Ausführung

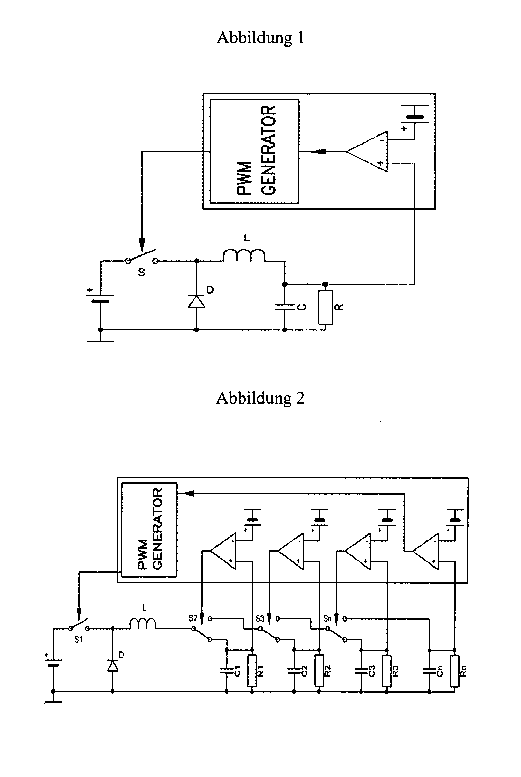

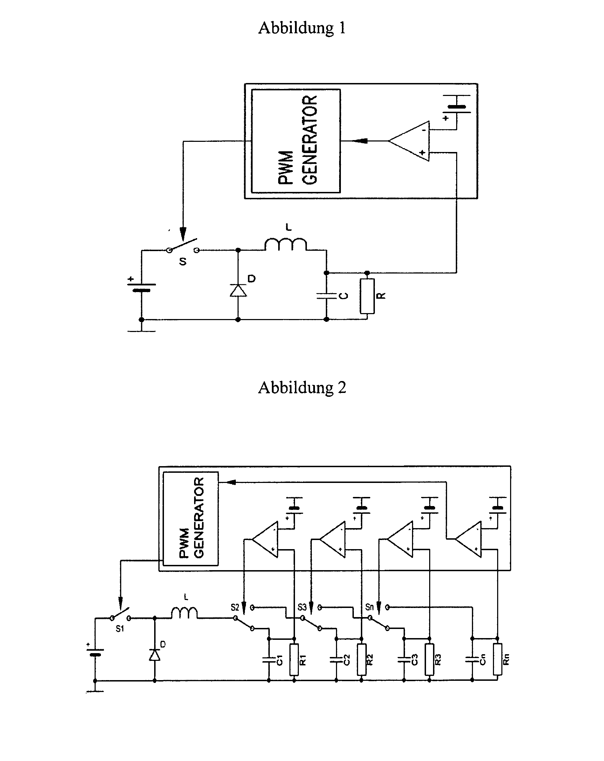

Abbildung 1 zeigt das Schema eines typischen Schaltwandlers (DC-DC), der für die Umwandlung von höheren in niedrige Spannungen konstruiert ist (»stepdown«). Wenn mehrere unterschiedliche Ausgangsspannungen erforderlich sind, benötigt man auch mehrere Blöcke. Für den Betrieb des Schaltwandlers mit einer Ausgangsspannung gebrauchen wir den PWM-Generator, der die einstufige Leistungsschaltung S steuert, durch welche der Strom aus der Spule L und dem geladenen Kondensator fliest. Für den ordnungsgemäßen Betrieb der Diode D und das Entladen des Kondensators C gebraucht man einen korrekterweise dimensionierten Wiederstand R.

Die Erfindung, die Gegenstand des vorliegenden Anspruchs ist, verwendet statt der doppelten Komponenten zusätzliche Niederspannungsschalter, die den Ausgangsstrom des Schaltnetzteils in unterschiedlieche Ausgangszweige der Schaltung umleiten. Energie, die in der Spule L gespeichert ist, gezeigt in Abbildung 2, wird mit Hilfe der zweipoligen Schalter S2 bis Sn unter mehrere Ausgangskondensatoren aufgeteilt. U1 bis Un vergleicht die Spannung an einem einzelnen Kondensator mit Referenzspannung. Wenn die Spannung auf dem Kondensator C1 höher ist als die Referenzspannung, schaltet der Schalter S1 um, so dass der Strom vorbei am C1 in den nächsten Schalter S2 umgeleitet wird. Wenn die Spannung am Kondensator C1 niedriger als die Referenzspannung ist, leitet der Schalter S1 den Strom in C1 um, so das der sich füllt. Als der Strom zum S2 kommt, wiederholt sich der Entscheidungsprozess für C2 und so weiter bis zum Cn. Ist dieser auf den gewünschten Wert gefüllt, schaltet sich der Schalter S1 bis auf weiteres aus.

Der Kondensator Cn leert sich wegen Rn, weswegen sich S1 in relativ kürzer Zeit wieder aktiviert, der Entscheidungsprozess, der Stromrichtung wiederholt sich für alle Kondensatoren.

Normalerweise verwendet man für Schalter von S2 bis Sn preiswerte Transistoren oder Dioden, während S1 die teuerere, manchmal Hochspannungskomponente ist, die schnelle Umschaltungen und volle Versorgungsspannungen leisten muss.

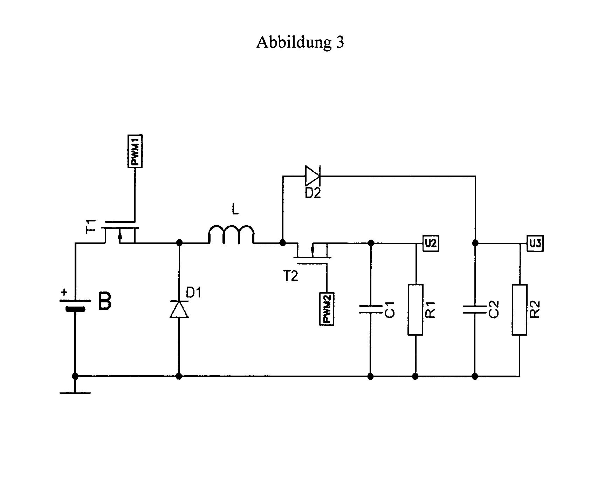

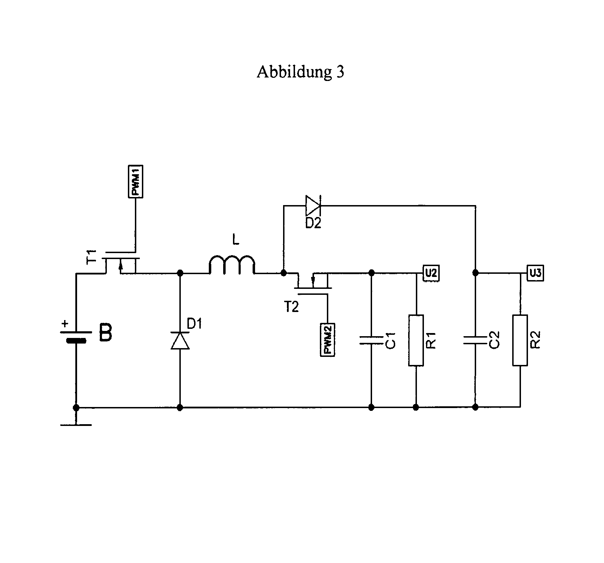

Auf Abbildung 3 ist das vereinfachte Schema der realen Ausführung dargestellt, die getestet wurde. Statt des an der Abbildung 2 gezeigten S1, verwendet man den Halbleiterschalter (MOSFET Transistor) T1, mit Stromleistung 0.5A (typisch 0.1 A - 2 A) und der Spannungshärte von 700V (etwas höhere Spannung, als die Spannung B). Die Steuerung erfolgt durch die vorher beschriebene Schaltung über den PWM1 Anschluss. Der Schalter S2, gezeigt in der Abbildung 2, ist durch die Halbleiterdiode D2 und den MOSFET Transistor T2 ersetzt, das über den PWM2 Anschluss aus der Steuerungsschaltung auf die gleiche Weise gesteuert wird, als der, in Abbildung 2 gezeigter, Schalter S2. Die Stromkapazität von T2 ist ähnlich als bei T1, die Spannungsleistung muss aber höher als die höchste Ausgangsspannung U2 oder U3 sein (typisch 20...200 V). Die Spannungsleistung D2 muss mindestens U3 sein, die Stromkapazität muss am wenigsten den Strom gleichen der durch R2 fliest. Die Begrenzung einer solchen Ausführung (Transistor T1 und T2 und Diode D1 und D2 statt des zweipoligen Schalters S1 bis Sn) besteht darin, dass U2 immer niedriger als U3 sein muss, weil nur in diesen Fall statt des zweiten Kontakts S2 (Abbildung 2), die Diode D2 (Abbildung 3), verwendet werden kann. Andernfalls muss man einen zusätzlichen Transistor und eine zusätzliche Steuerung der Steuerungsschaltung gebrauchen.

Diese ist immer Teil einer größeren Schaltung, konkreter einer Elektronik für die Steuerung der Umlaufpumpen. Sie kann überall, wo der Bedarf nach unterschiedlichen Spannungen für das Laden der Teilsysteme des Geräts bzw. der elektrischen Spannung besteht, gebraucht werden. Elektrische Isolation mit dem Transformator ist nicht notwendig.

Der Vorteil dieser Erfindung besteht darin, das am jeden Ausgang zu jeder Zeit die volle Leistung des Schaltwandlers zu Verfügung steht.

Wenn mehrere vollständig getrennte Wandler gebraucht werden, muss jede von den Schaltungen die höchste Leistung gewährleisten, die der bestimmte Ausgang erfordert. Mit Hilfe der Erfindung braucht der Schaltwandler nur eine solche Leistung, als die Summe der gewünschten Leistungen an allen Ausgängen, weswegen die Komponenten besser ausgenutzt werden.

Wo zum Beispiel zwei unterschiedliche Spannungen Erforderlich sind, eine mit hohen und die andere mit niedrigen Leistungsverbrauch, besteht die Möglichkeit von signifikanten Einsparungen bei den Preis, leistungsfähigere Komponenten haben nämlich einen viel niedrigen Preis pro Watt Leistung.

Man kann also bestimmen, in welcher Rheinfolge sich die Ausgänge ein- und ausschalten. Der erste Ausgang hat nämlich den Vorteil bei der Leistungsabnahme.

## Patentansprüche

1. Der Schaltwandler mit einer Spule und einer oder mehreren Ausgangsspannungen ist so konzipiert, das er die Regulierung der Ausgangsspannung mit Hilfe der Leistungsschaltwandlers - des Schalters S ermöglicht und mit den Gebrauch von nur einer Spule (L), die in Verbindung mit den Kondensator (C) in der Funktion der Energiespeicherung steht, so dass sich dabei mit den Wiederstand (R) das leeren des Kondensators (C) ausführt und die Steuerung mit Hilfe des Generators ( PWM GENERATOR) und der Diode (D).

2. Der Schaltwandler nach Anspruch 1 ist dafür Kennzeichnend, das für den Wandler, der mehrere Ausgangsspannungen hat, mehrere Schalter (S1 bis Sn) gebraucht werden, wobei der Schalter (S1) den Leistungsschalter darstellt, der ebenfalls mit einer Spule (L) und der Diode (D) geladen wird, für jeden Schalter der verschiedene Spannungen einschaltet, braucht man einen Kondensator (C1 bis Cn) und Wiederstände fürs entladen (R1 bis Rn), für die Steuerung, wird ein Generator gebraucht (PWM Generator), dessen Zahl der Ausgänge der Zahl der Schalter entspricht.

3. Der Schaltwandler nach Anspruch 2 ist dafür Kennzeichnend, das für den Wandler, der mehrere Ausgangsspannungen hat, den Halbleiterschalter (T1) gebraucht wird, der ein Transistor ist, statt des Leistungsschalters (S1), der ebenfalls mit einer Spule (L) und der Diode (D1, D2) geladen wird, für jeden Halbleitungsschalter (T2) - Transistor braucht man einen Kondensator (C1 bis Cn) und Wiederstände fürs entladen (R1 bis Rn) für das Steuern des einzelnen Halbleitersschalters - Transistors (T1, T2) gebraucht man einen Generator (PWM1 für T1 und PWM2 für T2), der nur einen Ausgang für den Halbleitungsschalter (T1, T2), Kondensator (C1, C2) und Wiederstand (R1, R2) hat.

4. Der Schaltwandler nach Anspruch 2 ist dafür Kennzeichnend, dass die Stromleistung (T2) der Stromleistung (T1) ähnlich ist, die Spannungsleistung muss aber höher als die höchste Ausgangsspannung (U2) oder (U3) sein, dabei muss die Spannungsleistung bei (D2) mindestens (U3) entsprechen, die Stromleistung mindestens den Strom der durch (R2) fliest.

5. Der Schaltwandler nach Anspruch 3 ist Kennzeichnend dafür, dass der Schaltwandler wegen der Ausführung mit den Transistoren (T1) und (T2) und der Diode (D1) und (D2) beschränkt ist, die den zweipoligen Schalter (S2) bis (Sn) ersetzen, dabei muss (U2) immer niedriger als (U3) sein, weil man nur in diesen Fall statt des zweiten Kontakts die Diode (D2) gebraucht, weil andernfalls ein zusätzlicher Transistor und die zusätzliche Steuerung aus der Steuerungsschaltung gebraucht werden muss.
